# EUROPÄISCHE PATENTSCHRIFT

(11) **EP 3 177 767 B1**
(45) Veröffentlichungstag und Bekanntmachung des Hinweises auf die Patenterteilung: **08.04.2020**
(21) Anmeldenummer: 15756119.2
(22) Anmeldetag: 04.08.2015
(51) Int. Cl.: D21C 3/02, C02F 11/00, D21C 11/00, D21H 11/02, C08L 97/00, D01F 9/17

(54) **VERFAHREN ZUR GEWINNUNG EINES STABILISIERTEN LIGNINS MIT DEFINIERTER KORNGRÖSSENVERTEILUNG AUS EINER LIGNIN BEINHALTENDEN FLÜSSIGKEIT**
METHOD FOR OBTAINING STABILIZED LIGNIN HAVING A DEFINED PARTICLE-SIZE DISTRIBUTION FROM A LIGNIN-CONTAINING LIQUID
PROCÉDÉ D'EXTRACTION D'UNE LIGNINE STABILISÉE AYANT UNE DISTRIBUTION GRANULOMÉTRIQUE DÉFINIE À PARTIR D'UN LIQUIDE CONTENANT DE LA LIGNINE

(30) Priorität: 08.08.2014 DE 102014215807
(43) Veröffentlichungstag der Anmeldung: 14.06.2017
(73) Patentinhaber: SunCoal Industries GmbH, 14974 Ludwigsfelde (DE)
(72) Erfinder: WITTMANN, Tobias, 10965 Berlin (DE)
(74) Vertreter: Maikowski & Ninnemann Patentanwälte Partnerschaft mbB
(86) Internationale Anmeldenummer: PCT/EP2015/067958
(87) Internationale Veröffentlichungsnummer: WO 2016/020383

(56) Entgegenhaltungen:
- WO-A1-2013/070130
- WO-A1-2014/096544
- WO-A1-2015/018944
- WO-A1-2015/025076
- SHIMIN KANG ET AL: "-Xylose, and Wood Meal", INDUSTRIAL & ENGINEERING CHEMISTRY RESEARCH, Bd. 51, Nr. 26, 4. Juli 2012 (2012-07-04), Seiten 9023-9031, XP055159960, ISSN: 0888-5885, DOI: 10.1021/ie300565d

## Beschreibung

Die Erfindung betrifft ein Verfahren zur Gewinnung eines stabilisierten Lignins mit definierter Korngrößenverteilung aus einer Lignin beinhaltenden Flüssigkeit indem die H+ lonenkonzentration einer Lignin beinhaltenden Flüssigkeit vor und/oder während einer hydrothermalen Karbonisierung so eingestellt wird, dass die gewünschte Korngrößenverteilung des hydrothermal karbonisierten Lignins erhalten wird und dieses von der das karbonisierte Lignin beinhaltenden Flüssigkeit abgetrennt und ggf. gereinigt werden kann.

### Definitionen

### Lignin beinhaltende Flüssigkeit:

Mit Lignin beinhaltender Flüssigkeit ist im Folgenden eine Flüssigkeit, bevorzugt Wasser, gemeint, die Lignin enthält, wobei das Lignin entweder gelöst und/oder als filtrierbarer Feststoff vorliegen kann. Bevorzugt handelt es sich bei der Lignin beinhaltenden Flüssigkeit um Ablauge aus einem Fraktionierungsprozess für Biomasse z.B. aus einem KRAFT Prozess oder einem Kaliumhydroxyd Prozess. Handelt es sich bei der Lignin beinhaltenden Flüssigkeit um Ablauge aus einem Fraktionierungsprozess, so liegt der pH-Wert der Lignin beinhaltenden Flüssigkeit in der Regel im neutralen oder alkalischen Bereich, in der Regel bei einem pH-Wert von > 7.

Weiterhin bevorzugt handelt es sich bei der Lignin beinhaltenden Flüssigkeit um eine Flüssigkeit, die den Lignin beinhaltenden Rückstand aus einer Hydrolyse, zum Beispiel einer thermischen Hydrolyse, einer enzymatischen Hydrolyse oder einer säurekathalysierten Hydrolyse enthält, wobei der Lignin beinhaltende Rückstand aus der Hydrolyse bevorzugt zunächst entwässert wird und der so gewonnenen Filterkuchen oder das so gewonnene Konzentrat anschließend mit einer Flüssigkeit vermischt wird und zusammen mit dieser die Lignin beinhaltende Flüssigkeit bildet, welche dem erfindungsgemäßen Verfahren zugeführt wird. Handelt es sich bei der Lignin beinhaltenden Flüssigkeit um den Lignin beinhaltenden Rückstand aus einer Hydrolyse, so liegt der pH-Wert, wenn der Lignin beinhaltenden Rückstand nach einer Entwässerung mit destilliertem Wasser vermischt wird, in der Regel im neutralen oder sauren Bereich, in der Regel bei einem pH Wert von < 7.

Die Lignin beinhaltende Flüssigkeit kann neben Lignin noch weitere organische und anorganische Bestandteile enthalten. Kennzeichnend für die Lignin beinhaltende Flüssigkeit ist, dass der Ligninanteil an der organischen Trockenmasse bei über 50%, insbesondere bei über 60% oder sogar bei über 70% und damit deutlich über dem Ligninanteil von holziger Biomasse liegt, der bei 15% - 35% liegt. Mit Ligninanteil ist im Folgenden die Summe aus Klason Lignin und säurelöslichem Lignin gemeint. Insofern beziehen sich Mengen- und Prozentangaben für Lignin im Folgenden immer auf die aschefreie Trockenmasse.

### Stabilisiertes Lignin

Lignin, welches einer hydrothermalen Karbonsierung nach dem erfindungsgemäßen Verfahren bei einer Temperatur in einem Bereich von etwa 150°C bis etwa 280 °C, z.B. in einem Temperaturbereich zwischen 180°C und 280 °C, insbesondere einem Temperaturbereich zwischen 180 °C und 250 °C und insbesondere einem Temperaturbereich zwischen 190 °C und 250 °C unterzogen wurde, wird im Folgenden als stabilisiertes Lignin bezeichnet. Das stabilisierte Lignin wird auch als karbonisiertes Lignin bezeichnet.

### Karbonisiertes Lignin beinhaltende Flüssigkeit

Flüssigkeit, die das karbonisierte Lignin nach der hydrothermalen Karbonisierung enthält, wobei das karbonisierte Lignin entweder gelöst und/oder als filtrierbarer Feststoff in der Flüssigkeit vorliegen kann, wird im Folgenden als karbonisiertes Lignin beinhaltende Flüssigkeit bezeichnet.

### Gelöstes Lignin / gelöstes karbonisiertes Lignin

Lignin wird im Folgenden als in der Lignin beinhaltenden Flüssigkeit gelöstes Lignin bzw. als in der das karbonisierte Lignin beinhaltenden Flüssigkeit gelöstes karbonisiertes Lignin bezeichnet, wenn es nicht durch eine Filtration mittels eines Filterpapieres mit einer Porengröße von < 10 µm aus der Lignin beinhaltenden Flüssigkeit oder der karbonisierten Lignin beinhaltenden Flüssigkeit abgetrennt werden kann.

### Ungelöstes Lignin / ungelöstes karbonisiertes Lignin

Lignin wird im Folgenden als in der Lignin beinhaltenden Flüssigkeit ungelöstes Lignin bzw. als in der das karbonisierte Lignin beinhaltenden Flüssigkeit ungelöstes karbonisiertes Lignin bezeichnet, wenn es durch eine Filtration mittels eines Filterpapieres mit einer Porengröße von < 10 µm aus der Lignin beinhaltenden Flüssigkeit oder der karbonisierten Lignin beinhaltenden Flüssigkeit abgetrennt werden kann.

### Fällung von gelöstem Lignin / Fällung von gelöstem karbonisierten Lignin

Mit Fällung oder Ausfällung ist im Folgenden eine überwiegende Überführung von mehr als 40%, bevorzugt von mehr als 50%, weiter bevorzugt von mehr als 60%, besonders bevorzugt von mehr als 70% von gelöstem Lignin bzw. gelöstem karbonisierten Lignin in ungelöstes Lignin bzw. ungelöstes karbonisiertes Lignin gemeint.

### Trockenmasse:

Die Trockenmasse ist der Eindampfrückstand einer Flüssigkeit, gewonnen bei einer Eindampfung unter Umgebungsdruck bei 105°C bis zur Gewichtskonstanz.

### Organische Trockenmasse:

Die organische Trockenmasse ist die Trockenmasse abzüglich der bei einer Veraschung bei 815°C bis zur Gewichtskonstanz zurückbleibenden Asche.

### Korngrößenverteilung

Unter Korngrößenverteilung wird im Folgenden die Q3 - Verteilung verstanden. Die Messung der Korngrößenverteilung des Lignins oder des karbonisierten Lignins erfolgt in einer Suspension mittels Laserbeugung ohne vorherige Trocknung des Lignins oder des karbonisierten Lignins. Vor und/oder während der Messung der Korngrößenverteilung wird die zu vermessende Probe mit Ultraschall solange dispergiert, bis eine über mehrere Messungen stabile Korngrößenverteilung erhalten wird.

### Kolloidales karbonisiertes Lignin

Unter kolloidalem karbonisiertem Lignin soll im Folgenden eine Suspension aus karbonisiertem Lignin in einer Flüssigkeit verstanden werden, wobei das karbonisierte Lignin bei einem Trockenstoffanteil von > 1% in der Flüssigkeit kein Sediment ausbildet, sondern homogen in dieser verteilt ist. Die homogene Verteilung des karbonisierten Lignins in der Flüssigkeit wird durch eine ausstreichend starke Polarität der karbonisierten Ligninpartikel erreicht. Der D90 der Partikelgrößenverteilung des karbonisiertem kolloidalen Lignins liegt in der Regel bei weniger als 60 µm und der D50 bei in der Regel weniger als 20 µm. Bei ausreichender Dispergierung mit Ultraschall liegt der D90 der Partikelgrößenverteilung des karbonisiertem kolloidalen Lignins in der Regel bei weniger als 30 µm der D50 bei in der Regel weniger als 10 µm. Die Korngrößenverteilung des kolloidalen karbonisierten Lignins ist in der Regel unimodal.

### Sediment von karbonisiertem Lignin

Ein Sediment von karbonisiertem Lignin bildet sich dann aus, wenn die Polarität und/oder die Partikelgrößenverteilung des karbonisierten Lignin so angelegt ist, dass mindestens 90% des karbonisierten Lignins unter Einwirkung der Schwerkraft innerhalb von maximal 5 Minuten eine Sedimentschicht ausbilden.

Unter Feinsediment von karbonisiertem Lignin soll im Folgenden verstanden werden, dass der D90 der Partikelgrößenverteilung bei weniger als 1000 µm liegt. In einem Ausführungsbeispiel liegt der D90 der Partikelgrößenverteilung bei weniger als 100 µm, insbesondere bei weniger als 50 µm. Die Korngrößenverteilung eines Feinsediments von karbonisiertem Lignin kann vergleichbar mit der eines kolloidalen karbonisierten Lignins sein. Der Unterschied zwischen einem kolloidalen karbonisierten Lignin und einem Feinsediment von karbonisiertem Lignin besteht darin, dass im Unterschied zum kolloidalen karbonisierten Lignin mindestens 90% des Feinsediments an karbonisiertem Lignin bei einem Trockenstoffanteil > 1% unter Einwirkung der Schwerkraft innerhalb von maximal 5 Minuten eine Sedimentschicht ausbildet.

Unter Grobsediment soll im Folgenden verstanden werden, dass der D90 der Partikelgrößenverteilung bei mehr als 1000 µm liegt.

### Beschreibung

Lignin fällt als Nebenprodukt von Fraktionierungsprozessen von holziger Biomasse an. Während der Fraktionierungsprozesse wird das Lignin typischer Weise entweder in Lösung gebracht und dann von den nicht löslichen Bestandteilen der holziger Biomasse abgetrennt (z.B. KRAFT Prozess) oder die holzige Biomasse wird so depolymerisiert, dass das Lignin überwiegend als Feststoff verbleibt (z.B. Hydrolyseverfahren). Das Lignin liegt demnach je nach Art des Fraktionierungsprozesses entweder gelöst in einer Flüssigkeit oder als Feststoff vor.

Nach dem Stand der Technik kann Lignin, welches in einer Lignin beinhaltenden Flüssigkeit gelöst ist, durch die Erhöhung der H+ lonenkonzentration ausgefällt werden. Weiterhin ist bekannt, dass durch die Führung dieses Ausfällprozesses insbesondere durch eine gezielte Anpassung des pH-Wertes, der lonenstärke und der Verweilzeit auf die Korngrößenverteilung des ausgefällten Lignins Einfluss genommen werden kann (WO 2012/177198 A1, WO 2013/070130A1). Lignin, welches durch Ausfällung aus einer gelöstes Lignin beinhaltenden Flüssigkeit gewonnen wurde, hat nach dem Stand der Technik ein thermoplastisches Verhalten (US 2013/0116383 A1). Wesentlicher Nachteil eines solchen Produktes ist, dass es sich bei einer Erwärmung plastisch verformt und somit nicht temperaturstabil ist. Die Anwendung eines solchen Lignins ist damit auf Anwendungen, in denen in der Regel Temperaturen von 80 °C nicht überschritten werden, beschränkt.

Nach dem Stand der Technik wird versucht, die thermoplastische Eigenschaft von Lignin durch eine Erhitzung unter inerten Bedingungen zum Beispiel unter Nutzung von Stickstoff, Helium, Neon, Argon, Krypton oder Xenon durch eine Stabilisierung zu überwinden (WO 2013/112100 A1). Wesentlicher Nachteil eines solchen Verfahrens ist die Fokussierung auf den Anwendungsfall der Kohlefasern sowie die hohen Kosten für die Stabilisierung.

Weiterhin ist bekannt, dass Lignin durch eine hydrothermale Karbonisierung bei Temperaturen über 300 °C zu einem Ersatz für Kunststoffe aufbereitet werden kann (JP 2011-178851 A). Wesentlicher Nachteil eines solchen Verfahrens ist die hohe Prozesstemperatur. Weiterhin ist nicht klar, ob und wie in einer solchen Variante der hydrothermalen Karbonisierung auf die Partikelgrößenverteilung Einfluss genommen werden kann. Weiterhin ist unklar, ob das Lignin, das nach dem in der Druckschrift JP 2011-178851 A beschriebene Verfahren behandelt wurde, seine thermoplastisches Verhalten verloren hat.

Aufgabe der Erfindung ist es, die Nachteile des Standes der Technik bei der Nutzung von Lignin zu überwinden und die Gewinnung von Lignin mit einer definierten Korngrößenverteilung zu verbessern.

Die Aufgabe wird durch ein erfindungsgemäßes Verfahren zur Gewinnung von stabilisiertem Lignin mit definierter Korngrößenverteilung aus einer Lignin beinhaltenden Flüssigkeit gelöst, in dem
- die Lignin beinhaltende Flüssigkeit bei Temperaturen in einem Bereich von etwa 150 °C bis etwa 280 °C, bevorzugt in einem Bereich von 200 °C und 250 °C, einer hydrothermalen Karbonisierung unterzogen wird wodurch das Lignin in ein karbonisiertes Lignin überführt wird,
- die Korngrößenverteilung des karbonisierten Lignins durch Anpassung der H+ lonenkonzentration in der Lignin beinhaltenden Flüssigkeit vor und/oder während der hydrothermalen Karbonisierung eingestellt wird,
- wobei zum Erreichen einer möglichst geringen Korngrößenverteilung des karbonisierten Lignins, eine geringe H⁺ lonenkonzentration eingestellt wird und
- zum Erreichen einer möglichst großen Korngrößenverteilung des karbonisierten Lignins, eine hohe H⁺ lonenkonzentration eingestellt wird.

Das karbonisierte Lignin wird von der das karbonisierte Lignin beinhaltenden Flüssigkeit abgetrennt.

Im Rahmen eines erfindungsgemäßen Verfahrens wird somit stabilisiertes Lignins aus einer Lignin beinhaltenden Flüssigkeit gewonnen, die Korngrößenverteilung des stabilisierten Lignins eingestellt und das stabilisierte Lignin von der das stabilisierte Lignin beinhaltenden Flüssigkeit abgetrennt. Gegebenenfalls wird das stabilisierte Lignin noch gereinigt.

Durch ein erfindungsgemäßes Verfahren kann stabilisiertes Lignin mit einer definierten Korngrößenverteilung gewonnen werden. Hierbei ist die Abtrennung von Lignin aus der Lignin beinhaltenden Flüssigkeit gegenüber dem Stand der Technik deutlich vereinfacht. Beispielsweise werden die Korngrößenverteilung und die Polarität des stabilisierten Lignins so eingestellt, dass das stabilisierte Lignin von der das stabilisierte Lignin beinhaltenden Flüssigkeit durch Filtration oder Dekantation abgetrennt werden kann. Im Übrigen lässt sich auf Basis des erfindungsgemäßen Verfahrens auch die Reinigung des Lignins von anorganischen Bestandteilen gegenüber dem Stand der Technik vereinfachen.

Nach dem Stand der Technik wirkt eine Säure katalytisch auf eine hydrothermale Karbonisierung von Biomasse ein. Weiterhin wird nach dem Stand der Technik bei einer hydrothermalen Karbonisierung von Biomasse Säure in Form von hauptsächlich Essigsäure, Ameisensäure und Lävulinsäure frei. Eine hydrothermale Karbonisierung von Biomasse erfolgt deshalb auch autokatalytisch. Nach dem Stand der Technik werden in einer hydrothermalen Karbonisierung von Lignin hauptsächlich wenige Phenolverbindungen aus diesem herausgelöst, der Feststoff bleibt jedoch überwiegend als solcher erhalten.

Überraschenderweise wurde bei Versuchen festgestellt, dass Lignin während einer hydrothermalen Karbonisierung unter Verbrauch von H+ Ionen polymerisiert. Sind in der Lignin beinhaltenden Flüssigkeit wenige H+ Ionen vorhanden, so kann die Polymerisation des Lignins verlangsamt oder gänzlich unterdrückt werden. Sind in der Lignin beinhaltenden Flüssigkeit viele H+ Ionen vorhanden, so erfolgt eine Polymerisation. Dies macht sich nun die erfindungsgemäße Lösung zunutze.

Ein Ausführungsbeispiel eines erfindungsgemäßen Verfahrens unterscheidet sich somit vom bekannten Stand der Technik, in dem Säuren als Katalysatoren verwendet werden, um z.B. die die Reaktionstemperatur einer hydrothermalen Karbonisierung zu reduzieren, dadurch, dass in dem erfindungsgemäßen Verfahren Säure lediglich zur Erhöhung der H+ lonenkonzentration genutzt wird, wobei die H+ Ionen die Polymerisation des Lignins in der hydrothermalen Karbonisierung ermöglichen und dabei verbraucht werden. Die Säure wird demnach nicht als Katalysator verwendet, sondern ist Reaktionsteilnehmer. Dies kann zum Beispiel dadurch festgestellt werden, dass bei Einstellung einer H+ lonenkonzentration in der Lignin beinhaltenden Flüssigkeit vor der hydrothermalen Karbonisierung, die eine Polymerisation des Lignins begünstigt, die H+ lonenkonzentration nach der hydrothermalen Karbonisierung reduziert ist, die H+ Ionen demnach verbraucht wurden.

Ebenso kann im Unterschied zum Stand der Technik vorgesehen sein, dass eine Base zur Reduzierung der H+ lonenkonzentration genutzt wird, wobei durch die fehlenden H+ Ionen die Polymerisation des Lignins unterdrückt wird. Die Base wird demnach nicht als Katalysator, sondern zur Bindung von H+ Ionen genutzt. Diese kann zum Beispiel dadurch festgestellt werden, dass bei Einstellung einer H+ lonenkonzentration in der Lignin beinhaltenden Flüssigkeit vor der hydrothermalen Karbonisierung, die eine Polymerisation des Lignins unterdrückt, die H+ lonenkonzentration nach der hydrothermalen Karbonisierung nicht wesentlich verändert ist. Soll eine möglichst geringe Korngrößenverteilung des karbonisierten Lignins erreicht werden, so muss die Polymerisation des Lignins verlangsamt bzw. unterdrückt werden. Es ist demnach eine geringe H+ lonenkonzentration einzustellen. Soll eine möglichst große Korngrößenverteilung des karbonisierten Lignins erreicht werden, so muss Polymerisation des Lignins ermöglicht werden. Es ist demnach eine hohe H+ lonenkonzentration einzustellen.

Ein Unterschied des erfindungsgemäßen Verfahrens zum Stand der Technik, der die Einstellung der Korngrößenverteilung von Lignin in einem Fällprozess über die Anpassung z.B. des pH-Werts, der Verweilzeit und der lonenstärke umfasst, ist, dass die Korngrößenverteilung des karbonisierten Lignins nicht durch die Einstellung der Korngrößenverteilung des Lignins in einem Fällprozess vor der hydrothermalen Karbonisierung erreicht wird, sondern dass die H+ lonenkonzentration vor und/oder während der hydrothermalen Karbonisierung zur Einstellung der Korngrößenverteilung des karbonisierten Lignins genutzt wird. Die Korngrößenverteilung des karbonisierten Lignins wird demnach entweder je nach Bedarf durch das erfindungsgemäße Verfahren gegenüber der Korngrößenverteilung eines nach dem Stand der Technik gefällten Lignins verändert oder beibehalten. Somit kann die Korngrößenverteilung eines nach dem Stand der Technik gefällten Lignins während seiner Überfügung in karbonisiertes Lignin durch Anwendung des erfindungsgemäßen Verfahrens auch gezielt beibehalten werden.

Bevorzugt beträgt die Dauer der hydrothermalen Karbonisierung mindestens eine Stunde und maximal 6 Stunden, besonders bevorzugt beträgt die Dauer mindestens 2 Stunden und maximal 4 Stunden. In einer Variante beträgt die Dauer der hydrothermalen Karbonisierung etwa 3 Stunden.

In einer Ausführungsvariante ist die Dauer der hydrothermalen Karbonisierung so gewählt, dass ein karbonisiertes Lignin mit der gewünschten Korngrößenverteilung aus der karbonisierten Lignin beinhaltenden Flüssigkeit abgetrennt werden kann. Bei einer solchen Verfahrensführung kann die Dauer der hydrothermalen Karbonisierung auch unterhalb von einer Stunde liegen.

Wie oben bereits dargestellte, werden beispielsweise Säuren für eine Erhöhung der H+ lonenkonzentration und Basen für eine Erniedrigung der H+ lonenkonzentration in der Lignin beinhaltenden Flüssigkeit genutzt. Beispielsweise können auch Gase, die mit der Lignin beinhaltenden Flüssigkeit sauer oder basisch reagieren, bevorzugt CO₂ oder H2S zur Anpassung der H+ lonenkonzentration genutzt werden.

Sind neben dem Lignin in der Lignin beinhaltenden Flüssigkeit andere organische Polymere, zum Beispiel Biomasse, wie Holz, Stroh, Gras, etc., Zellulose, Hemicellulose und/oder deren Abbauprodukte z.B. Glukose etc. vorhanden, so werden aus diesen organischen Polymeren und deren Abbauprodukten während der hydrothermalen Karbonisierung organische Säuren gebildet, die die H+ lonenkonzentration in der Lignin beinhaltenden Flüssigkeit erhöhen. In diesem Zusammenhang kann vorgesehen sein, dass in einer Ausführungsvariante die Erhöhung der H+ lonenkonzentration in der das Lignin beinhaltenden Flüssigkeit die aufgrund der Bildung von organischen Säuren während der hydrothermalen Karbonisierung erfolgt, bei der Einstellung der H+ lonenkonzentration vor und/oder während der hydrothermalen Karbonisierung berücksichtigt wird. Alternativ oder ergänzend kann die H+ lonenkonzentration während der hydrothermalen Karbonisierung durch die Erhöhung des Anteils an Biomasse, wie Holz, Stroh, Gras, Zellulose, Hemicellulose und/oder deren Abbauprodukte in der Lignin beinhaltenden Flüssigkeit vor und/oder während der hydrothermalen Karbonisierung erhöht werden.

In einer Ausführungsvariante wird die Korngrößenverteilung des karbonisierten Lignins kontinuierlich oder regelmäßig gemessen und bei einer Abweichung der Korngrößenverteilung über einen definierten Toleranzwert hinaus, eine Anpassung der H+ lonenkonzentration in der Lignin beinhaltenden Flüssigkeit vorgenommen. So wird dann beispielsweise, bei einer erforderlichen Reduzierung der Korngrößenverteilung des karboinisierten Lignins, die H+ Ionen Konzentration in der Lignin beinhaltenden Flüssigkeit vor und/oder während der hydrothermalen Karbonsierung erniedrigt wird und, bei einer erforderlichen Erhöhung der Korngrößenverteilung des karbonisierten Lignins, die H+ lonenkonzentration in der Lignin beinhaltenden Flüssigkeit vor und/oder während der hydrothermalen Karbonisierung erhöht.

In einer Variante wird die H+ lonenkonzentration der das karbonisierte Lignin beinhaltenden Flüssigkeit nach der hydrothermalen Karbonisierung gemessen und als Maß für die Korngrößenverteilung genutzt. Bevorzugt wird die H+ lonenkonzentration der das karbonisierte Lignin beinhaltenden Flüssigkeit nach der hydrothermalen Karbonisierung und dadurch die Korngröße des karbonisierten Lignins durch Anpassung der H+ lonenkonzentration in der Lignin beinhaltenden Flüssigkeit vor und/oder während der hydrothermalen Karbonisierung eingestellt.

Als Maß für die H+ lonenkonzentration in der Lignin beinhaltenden Flüssigkeit kann der pH Wert verwendet werden. Dementsprechend kann in einer Variante die Korngrößenverteilung des karbonisierten Lignins durch Anpassung des pH Wertes der Lignin beinhaltenden Flüssigkeit vor und/oder während der hydrothermalen Karbonisierung eingestellt werden. Bevorzugt wird der pH Wert der das karbonisierte Lignin beinhaltenden Flüssigkeit nach der hydrothermalen Karbonisierung und dadurch die Korngröße des karbonisierten Lignins durch Anpassung des pH Wertes der Lignin beinhaltenden Flüssigkeit vor und/oder während der hydrothermalen Karbonisierung eingestellt.

Die oben aufgeführten Varianten eines erfindungsgemäßen Verfahrens können auch untereinander kombiniert werden.

### Mögliche Ausführungsformen für Einsatzstoffe

Im Folgenden werden exemplarisch mögliche Ausführungsformen des erfindungsgemäßen Verfahrens offenbart, die jeweils mit den oben genannten Varianten kombiniert werden können.

Eine Ausführungsform des erfindungsgemäßen Verfahrens ist zum Beispiel dadurch gekennzeichnet, dass
- Lignin aus der Lignin beinhaltenden Flüssigkeit ausgefällt wird,
- die Lignin beinhaltende Flüssigkeit bei Temperaturen in einem Bereich von etwa 150 °C bis etwa 280 °C, bevorzugt in einem Bereich von 200 °C bis 250 °C, einer hydrothermalen Karbonisierung unterzogen wird, wodurch das Lignin in ein karbonisiertes Lignin überführt wird,
- die Korngrößenverteilung des karbonisierten Lignins durch Anpassung der H+ lonenkonzentration in der Lignin beinhaltenden Flüssigkeit vor und/oder während der hydrothermalen Karbonisierung eingestellt wird und
- das karbonisierte Lignin von der das karbonisierte Lignin beinhaltenden Flüssigkeit abgetrennt wird.

In dieser Ausführungsform des erfindungsgemäßen Verfahrens wird das Lignin, welches zunächst gelöst in der Lignin beinhaltenden Flüssigkeit vorliegt, ausgefällt und dann der hydrothermalen Karbonisierung zugeführt. Beispielsweise handelt es sich bei der Lignin beinhaltenden Flüssigkeit um Ablauge aus einem basischen Fraktionierungsverfahren, z.B. einem KRAFT Aufschluss. Diese Ausführungsform des erfindungsgemäßen Verfahrens beinhaltet also einen Fällungsschritt vor der hydrothermalen Karbonisierung, in dem der pH Wert der Lignin beinhaltenden Flüssigkeit so weit abgesenkt wird, dass Lignin aus dieser ausfällt, bevorzugt auf einen Wert zwischen 9,5 und 10,5. Zur Absenkung des pH Wertes können Säuren oder Gase, die mit der Lignin beinhaltenden Flüssigkeit sauer reagieren, eingesetzt werden. Bevorzugt wird CO₂ für die Absenkung des pH Wertes eingesetzt. Bevorzugt wird in dieser Ausführungsform des erfindungsgemäßen Verfahrens ein kolloidales Lignin oder ein Feinsediment an karbonisiertem Lignin gewonnen.

Eine weitere Ausführungsform des erfindungsgemäßen Verfahrens ist zum Beispiel dadurch gekennzeichnet, dass
- Lignin aus einer ersten Lignin beinhaltenden Flüssigkeit ausgefällt wird,
- das ausgefällte Lignin von der ersten Lignin beinhaltenden Flüssigkeit abgetrennt wird,
- das ausgefällte und abgetrennte Lignin in einer Flüssigkeit suspendiert wird und hierdurch eine zweite Lignin beinhaltende Flüssigkeit gewonnen wird, wobei das ausgefällte und abgetrennte Lignin in einer Weiterbildung auch in der Flüssigkeit zumindest teilweise oder vollständig gelöst werden kann,
- die zweite Lignin beinhaltende Flüssigkeit bei Temperaturen in einem Bereich von etwa 150°C bis etwa 280 °C, bevorzugt zwischen 200 °C und 250 °C, einer hydrothermalen Karbonisierung unterzogen wird, wodurch das Lignin in ein karbonisiertes Lignin überführt wird,
- die Korngrößenverteilung des karbonisierten Lignins durch Anpassung der H+ lonenkonzentration in der Lignin beinhaltenden Flüssigkeit vor und/oder während der hydrothermalen Karbonisierung eingestellt wird und
- das karbonisierte Lignin von der das karbonisierte Lignin beinhaltenden Flüssigkeit abgetrennt wird.

In dieser Ausführungsform des erfindungsgemäßen Verfahrens wird das Lignin, welches zunächst gelöst in einer ersten Lignin beinhaltenden Flüssigkeit vorliegt, ausgefällt und dann weitgehend von dieser ersten Lignin beinhaltenden Flüssigkeit abgetrennt. Das von der ersten Lignin beinhaltendenden Flüssigkeit weitgehend abgetrennte ausgefällte Lignin wird in einer Flüssigkeit suspendiert und ggf. gelöst, wodurch eine zweite Lignin beinhaltende Flüssigkeit gewonnen wird, die dann der hydrothermalen Karbonisierung zugeführt wird. Beispielsweise handelt es sich bei der ersten Lignin beinhaltenden Flüssigkeit um Ablauge aus einem basischen Fraktionierungsverfahren, z.B. einem KRAFT Aufschluss. Diese Ausführungsform des erfindungsgemäßen Verfahrens beinhaltet also einen Fällungsschritt und einen Trennschritt vor der hydrothermalen Karbonisierung.

In dem Fällungsschritt wird der pH Wert der Lignin beinhaltenden Flüssigkeit so weit abgesenkt, dass das Lignin aus dieser ausfällt, bevorzugt auf einen Wert zwischen 9,5 und 10,5. Zur Absenkung des pH Wertes können Säuren oder Gase, die mit der Lignin beinhaltenden Flüssigkeit sauer reagieren eingesetzt werden. Bevorzugt wird CO₂ für die Absenkung des pH Wertes eingesetzt.

In dem Trennschritt wird die erste Lignin beinhaltende Flüssigkeit so weit möglich und erforderlich von dem gefällten Lignin abgetrennt. Für den Trennschritt kommt bevorzugt eine Filterpresse, eine Membranfilterpresse oder ein Dekanter zum Einsatz. Während des Trennschrittes werden bevorzugt mit der Lignin beinhaltenden Flüssigkeit auch anorganische Verunreinigungen vom Lignin abgetrennt. Die Lignin beinhaltende Flüssigkeit hat - nachdem das ausgefällte Lignin von dieser abgetrennt wurde - einen deutlich reduzierten Ligninanteil. Bevorzugt wird in dieser bevorzugten Ausführungsform des erfindungsgemäßen Verfahrens ein Feinsediment an karbonisiertem Lignin gewonnen.

Eine andere Ausführungsform des erfindungsgemäßen Verfahrens ist zum Beispiel dadurch gekennzeichnet, dass
- das Lignin in der Lignin beinhaltenden Flüssigkeit gelöst ist,
- die Lignin beinhaltende Flüssigkeit bei Temperaturen in einem Bereich von etwa 150 °C bis etwa 280 °C, bevorzugt in einem Bereich von 200 °C bis 250 °C, einer hydrothermalen Karbonisierung unterzogen wird, wodurch das Lignin in ein karbonisiertes Lignin überführt wird,
- Lignin bei seiner Überführung in karbonisiertes Lignin während der hydrothermalen Karbonisierung zumindest teilweise aus der Lignin beinhaltenden Flüssigkeit ausfällt oder ausgefällt wird,
- die Korngrößenverteilung des karbonisierten Lignins durch Anpassung der H+ lonenkonzentration in der Lignin beinhaltenden Flüssigkeit vor oder während der hydrothermalen Karbonisierung eingestellt wird,
- das karbonisierte Lignin von der das karbonisierte Lignin beinhaltenden Flüssigkeit abgetrennt wird.

In dieser Ausführungsform des erfindungsgemäßen Verfahrens ist das Lignin vor der hydrothermalen Karbonisierung in der Lignin beinhaltenden Flüssigkeit gelöst. Beispielsweise handelt es sich bei der Lignin beinhaltenden Flüssigkeit um Ablauge aus einem basischen Fraktionierungsverfahren, z.B. einem KRAFT Aufschluss. Lignin, welches nicht in der Lignin beinhaltenden Flüssigkeit gelöst ist, kann zunächst durch Erhöhung des pH-Wertes in Lösung gebracht und dann als gelöstes Lignin der hydrothermalen Karbonisierung zugeführt werden. Das gelöste Lignin wird in dieser Ausführungsform zumindest teilweise während der hydrothermalen Karbonisierung ausgefällt. Nach der hydrothermalen Karbonisierung kann eine weitere Fällung des noch in der das karbonisierte Lignin beinhaltenden Flüssigkeit gelösten karbonisierte Lignins erfolgen. Bevorzugt wird in dieser Ausführungsform des erfindungsgemäßen Verfahrens ein kolloidales Lignin oder ein Feinsediment an karbonisiertem Lignin gewonnen.

### Mögliche Ausführungsformen für Produkte

Im Folgenden werden exemplarisch drei alternative Ausführungsvarianten des erfindungsgemäßen Verfahrens offenbart.

So kann ein Verfahren zur Gewinnung von karbonisiertem Lignin mit definierter Korngrößenverteilung aus einer Lignin beinhaltenden Flüssigkeit vorgesehen sein, in dem
- die Lignin beinhaltende Flüssigkeit bei Temperaturen in einem Bereich von etwa 150 °C bis etwa 280 °C, bevorzugt in einem Bereich von 200 °C bis 250 °C einer hydrothermalen Karbonisierung unterzogen wird, wodurch das Lignin in ein karbonisiertes Lignin überführt wird,
- die Korngrößenverteilung des karbonisierten Lignins durch Anpassung der H+ lonenkonzentration in der Lignin beinhaltenden Flüssigkeit vor und/oder während der hydrothermalen Karbonisierung so eingestellt wird, dass sich ein kolloidales karbonisierte Lignin bildet wobei der pH-Wert der Lignin beinhaltenden Flüssigkeit vor und während der hydrothermalen Karbonisierung einen Wert von 10 nicht unterschreitet, und
- das karbonisierte Lignin von der das karbonisierte Lignin beinhaltenden Flüssigkeit abgetrennt wird.

In dieser Ausführungsvariante wird durch Einstellung der H+ lonenkonzentration in der Lignin beinhaltenden Flüssigkeit erreicht, dass sich ein kolloidales karbonisiertes Lignin bildet. Hierzu ist vor und während der hydrothermalen Karbonisierung eine H+ lonenkonzentration vorgesehen, die einem pH-Wert von >= 10 entspricht. Durch diese Einstellung der H+ lonenkonzentration wird erreicht, dass eine Polymerisation des Lignins während der hydrothermalen Karbonisierung unterdrückt wird. Weiterhin wird erreicht, dass Partikelgrößenverteilung und die funktionellen Gruppen des karbonisierten Lignins so angelegt sind, dass sich ein kolloidales karbonisiertes Lignin bildet. Bevorzugt wird das karbonisierte kolloidale Lignin durch eine Filtration bei einer Temperatur von bevorzugt mindestens 60 °C von der das karbonisierte kolloidale Lignin beinhaltenden Flüssigkeit abgetrennt.

In einer weiteren Variante ist ein Verfahren vorgesehen, in dem
- die Lignin beinhaltende Flüssigkeit bei Temperaturen in einem Bereich von etwa 150 °C bis etwa 280 °C, bevorzugt in einem Bereich von 200 °C bis 250 °C, einer hydrothermalen Karbonisierung unterzogen wird, wodurch das Lignin in ein karbonisiertes Lignin überführt wird,
- die Korngrößenverteilung des karbonisierten Lignins durch Anpassung der H+ lonenkonzentration in der Lignin beinhaltenden Flüssigkeit vor und/oder während der hydrothermalen Karbonisierung so eingestellt wird, dass sich ein Feinsediment an karbonisiertem Lignin bildet, und
- das karbonisierte Lignin von der das karbonisierte Lignin beinhaltenden Flüssigkeit abgetrennt wird.

Bevorzugt liegt hierbei der pH-Wert der Lignin beinhaltenden Flüssigkeit vor der hydrothermalen Karbonisierung bei > 7, besonders bevorzugt bei > 8, und während der hydrothermalen Karbonisierung zwischen 7 und 11, besonders bevorzugt zwischen 8 und 10.

In dieser Ausführungsvariante wird durch Einstellung der H+ lonenkonzentration in der Lignin beinhaltenden Flüssigkeit erreicht, dass sich ein Feinsediment an karbonisiertem Lignin bildet. Hierzu ist bevorzugt vor der hydrothermalen Karbonisierung eine H+ lonenkonzentration vorgesehen, die einem pH-Wert von > 7 entspricht. Während der hydrothermalen Karbonisierung ist bevorzugt eine H+ lonenkonzentration vorgesehen, die einem pH-Wert zwischen 7 und 11 entspricht. Durch diese Einstellung der H+ lonenkonzentration wird erreicht, dass die Bildung von groben Partikeln durch eine Polymerisation des Lignins während der hydrothermalen Karbonisierung weitgehend unterdrückt wird. Weiterhin wird erreicht, dass Partikelgrößenverteilung und die funktionellen Gruppen des karbonisierten Lignins so angelegt sind, dass sich ein Feinsediment an karbonisiertem Lignin bildet.

In einer weiteren Variante ist ein Verfahren zur Gewinnung von karbonisiertem Lignin mit definierter Korngrößenverteilung aus einer Lignin beinhaltenden Flüssigkeit vorgesehen, in dem
- die Lignin beinhaltende Flüssigkeit bei Temperaturen in einem Bereich von etwa 150 °C bis etwa 280 °C, bevorzugt in einem Bereiche von 200 °C bis 250 °C, einer hydrothermalen Karbonisierung unterzogen wird, wodurch das Lignin in ein karbonisiertes Lignin überführt wird,
- die Korngrößenverteilung des karbonisierten Lignins durch Anpassung der H+ lonenkonzentration in der Lignin beinhaltenden Flüssigkeit vor und/oder während der hydrothermalen Karbonisierung so eingestellt wird, dass sich ein Grobsediment an karbonisiertem Lignin bildet, und
- das karbonisierte Lignin von der das karbonisierte Lignin beinhaltenden Flüssigkeit abgetrennt wird.

Bevorzugt liegt hierbei der pH-Wert der Lignin beinhaltenden Flüssigkeit vor der hydrothermalen Karbonisierung bei < 9, besonders bevorzugt bei < 8, und während der hydrothermalen Karbonisierung bei < 8.

In dieser Ausführungsvariante wird durch Einstellung der H+ lonenkonzentration in der Lignin beinhaltenden Flüssigkeit erreicht, dass sich ein Grobsediment an karbonisiertem Lignin bildet. Hierzu ist bevorzugt vor der hydrothermalen Karbonisierung eine H+ lonenkonzentration vorgesehen, die einem pH-Wert von < 9 entspricht. Während der hydrothermalen Karbonisierung ist bevorzugt eine H+ lonenkonzentration vorgesehen, die einem pH-Wert von < 8 entspricht. Durch diese Einstellung der H+ lonenkonzentration wird erreicht, dass die Bildung von groben Partikeln durch eine Polymerisation des Lignins während der hydrothermalen Karbonisierung begünstigt wird. Weiterhin wird erreicht, dass die Partikelgrößenverteilung und die funktionellen Gruppen des karbonisierten Lignins so angelegt sind, dass sich ein Grobsediment an karbonisiertem Lignin bildet.

### Spezifische Ausführungsbeispiele

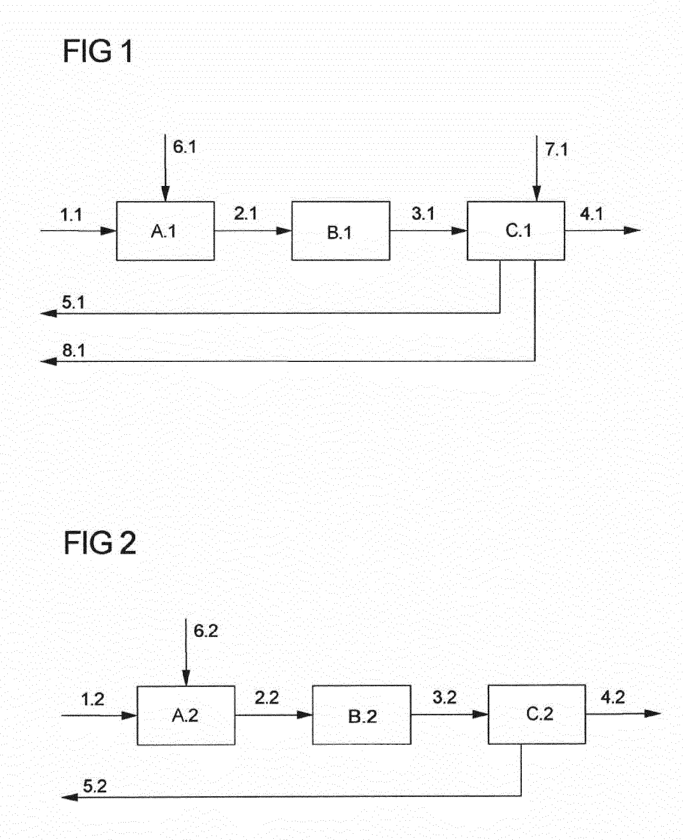

Nachfolgend werden noch weitere Ausführungsbeispiele erläutert, die zusätzlich in den beigefügten Figuren 1 bis 4 näher veranschaulicht sind.

### Ausführungsbeispiel 1 (FIG 1):

Im Ausführungsbeispiel 1 wird ein erfindungsgemäßes Verfahren zur Gewinnung eines stabilisierten Lignins mit definierter Korngrößenverteilung auf Schwarzlauge aus einem alkalischen Fraktionierungsprozess nach dem KRAFT Verfahren angewandt. Durch das Verfahren wird ein Feinsediment an karbonisiertem Lignin hergestellt. Das Ausführungsbeispiel wird in Abbildung 1 illustriert.

Die Schwarzlauge (1.1) wird aus der Eindampfanlage des KRAFT Verfahrens mit einem Trockenstoffgehalt von etwa 30 Ma.-% entnommen und stellt die Lignin beinhaltenden Flüssigkeit dar. Der pH-Wert der Schwarzlauge beträgt etwa 13. Das Lignin ist in der Schwarzlauge gelöst.

Zunächst wird der pH-Wert der Schwarzlauge durch Einleitung von CO₂ (6.1) in einer Vorrichtung zur pH-Absenkung (A.1) auf etwa 10,5 abgesenkt. Die so vorbehandelte Schwarzlauge (2.1) wird über eine Dauer von 3 Stunden und bei einer Temperatur von 250°C in einer hydrothermalen Karbonisierung (B.1) hydrothermal karbonisiert. Während der hydrothermalen Karbonisierung fällt karbonisiertes Lignin aus der Schwarzlauge aus. Aufgrund der Prozessführung kann auch vor der hydrothermalen Karbonisierung in der Vorrichtung zur pH-Absenkung (A.1) Lignin aus der Schwarzlauge ausfallen. Der überwiegende Teil fällt jedoch während der hydrothermalen Karbonisierung aus. Der pH-Wert der karbonisierten Schwarzlauge (3.1) beträgt nach der hydrothermalen Karbonisierung etwa 9,5. Das karbonisierte, ausgefällte Lignin wird von der karbonisierten Schwarzlauge durch eine mechanische Entwässerung (C.1) in einer Filterpresse abgetrennt und ein Filterkuchen gewonnen. Das so gewonnene Filtrat (5.1) wird in die Eindampfanlage des KRAFT Verfahrens zurückgeführt. Anschließend wird der Filterkuchen mit Wasser (7.1) gewaschen. Das Waschwasser wird nach der Wäsche (8.1) in die Eindampfanlage des KRAFT Verfahrens zurückgeführt. Der gewaschene Filterkuchen (4.1) besteht aus einem Feinsediment an karbonisiertem Lignin und verbleibendem Wasser und wird aus dem Verfahren ausgetragen.

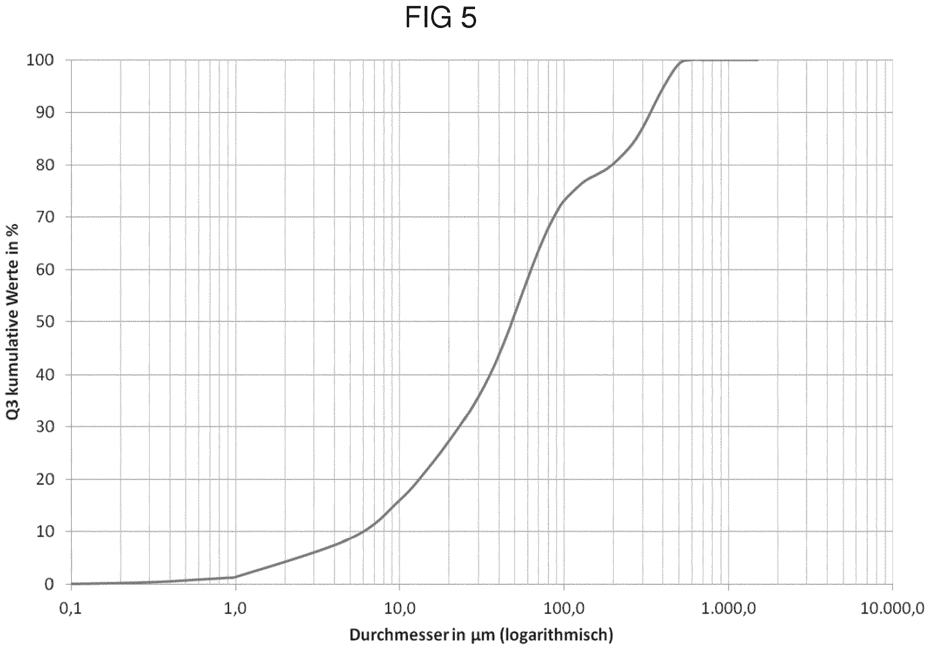

Zur Ermittlung der Q3-Verteilung der Korngröße des Feinsediments an karbonisiertem Lignins wurde der Filterkuchen (4.1) mit destilliertem Wasser verdünnt, mit Hilfe von Ultraschall über eine Dauer von 120 Sekunden dispergiert und mittels Laserbeugung mit dem Gerät Cilas-Lasergranulometer 1190 vermessen. Die so ermittelte Korngrößenverteilung des Feinsediments an karbonisiertem Lignin ist in FIG 5 dargestellt, die die Q3-Verteilung des karbonisierten Lignins für das Ausführungsbeispiel 1 zeigt. Der D90 beträgt 334,87 µm und der D50 beträgt 47,93 µm.

### Ausführungsbeispiel 2 (FIG 2):

Im Ausführungsbeispiel 2 wird ein erfindungsgemäßes Verfahren zur Gewinnung eines stabilisierten Lignins mit definierter Korngrößenverteilung auf Schwarzlauge aus einem alkalischen Fraktionierungsprozess nach dem KRAFT Verfahren angewandt. Durch das Verfahren wird ein kolloidales karbonisiertes Lignin hergestellt. Das Ausführungsbeispiel wird in Abbildung 2 illustriert.

Die Schwarzlauge (1.2) wird aus der Eindampfanlage des KRAFT Verfahrens mit einem Trockenstoffgehalt von 30 Ma.-% entnommen und stellt die Lignin beinhaltenden Flüssigkeit dar. Der pH-Wert der Schwarzlauge beträgt etwa 13. Das Lignin ist in der Schwarzlauge gelöst.

Zunächst wird der pH-Wert der Schwarzlauge durch Einleitung von CO₂ (6.2) in einer Vorrichtung zur pH-Absenkung (A.2) auf etwa 11,5 abgesenkt. Die so vorbehandelte Schwarzlauge (2.2) wird über eine Dauer von 3 Stunden und bei einer Temperatur von 250°C in einer hydrothermalen Karbonisierung (B.2) hydrothermal karbonisiert. Während der hydrothermalen Karbonisierung fällt karbonisiertes Lignin aus der Schwarzlage aus. Der pH-Wert der karbonisierten Schwarzlauge (3.2) beträgt nach der hydrothermalen Karbonisierung etwa 10,5. Das karbonisierte, ausgefällte Lignin wird von der karbonisierten Schwarzlauge durch eine mechanische Entwässerung (C.2) bei einer Temperatur von 80 °C durch Filtration abgetrennt. Das so gewonnene Filtrat (5.2) wird in die Eindampfanlage des KRAFT Verfahrens zurückgeführt. Der Filterkuchen (4.2) besteht aus einem kolloidalen, karbonisierten Lignin und verbleibender karbonisierter Schwarzlauge und wird aus dem Verfahren ausgetragen.

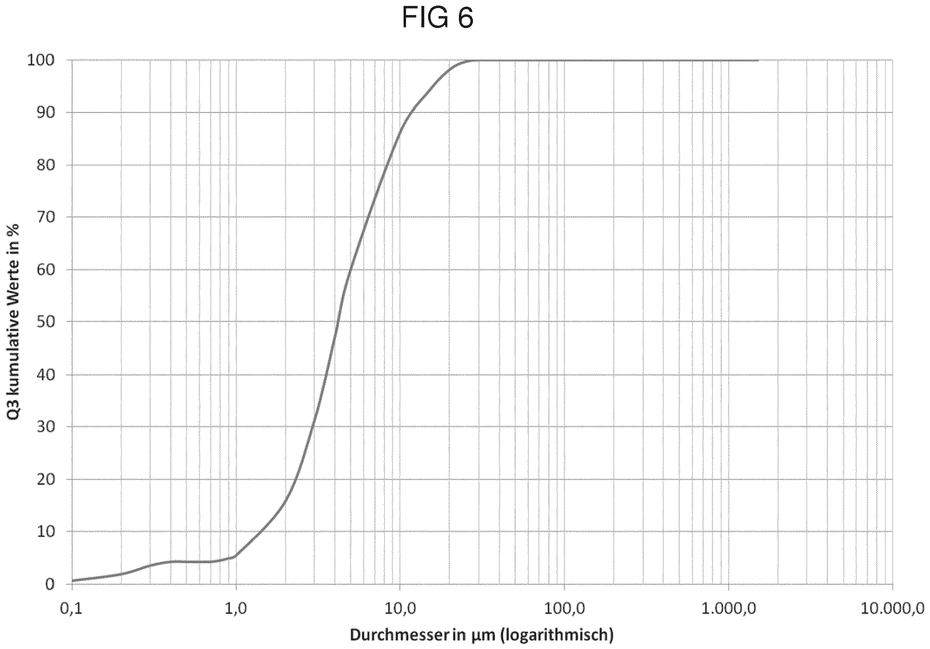

Zur Ermittlung der Q3-Verteilung der Korngröße des kolloidalen, karbonisieren Lignins wurde der Filterkuchen (4.2) mit destilliertem Wasser verdünnt, mit Hilfe von Ultraschall über eine Dauer von 30 Sekunden dispergiert und mittels Laserbeugung mit dem Gerät Cilas-Lasergranulometer 1190 vermessen. Die so ermittelte Korngrößenverteilung des kolloidalen, karbonisierten Lignins ist in FIG 6 dargestellt, die die Q3-Verteilung des karbonisierten Lignins für das Ausführungsbeispiel 2 zeigt. Der D90 beträgt 11,96 µm und der D50 beträgt 4,2 µm.

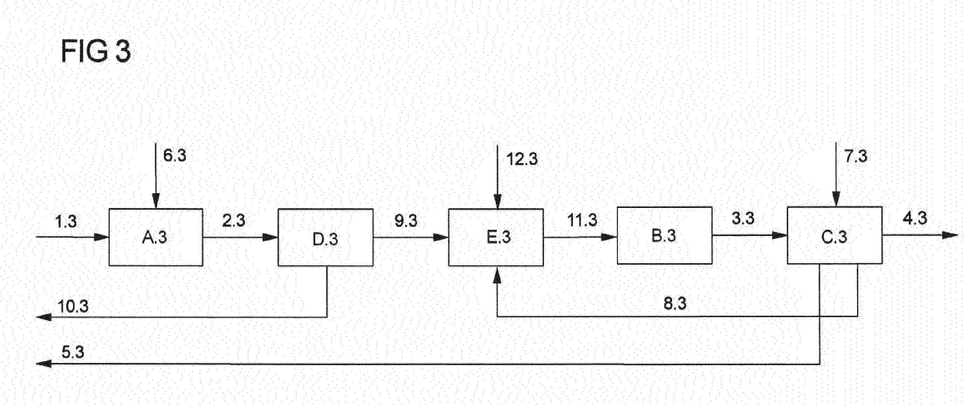

### Ausführungsbeispiel 3a (FIG 3):

Im Ausführungsbeispiel 3a wird ein erfindungsgemäßes Verfahren zur Gewinnung eines stabilisierten Lignins mit definierter Korngrößenverteilung auf kolloidales Lignin angewandt. Der Ligninanteil des kolloidalen Lignins liegt über 90%.

Das kolloidale Lignin wird durch Ansäuern von Schwarzlauge (1.3) mit CO₂, (6.3) in einer Vorrichtrung zur Absenkung des pH-Wertes (A.3) welche aus der Eindampfanlage eines KRAFT Verfahrens entnommen wird, aus dieser ausgefällt. Anschließend wird das Gemisch aus Schwarzlauge und ausgefälltem Lignin (2.3) einer Membranfilterpresse (D.3) zugeführt und dort mechanisch entwässert. Das Filtrat aus der Membranfilterpresse (10.3) wird in die Eindampfanlage des KRAFT Verfahrens zurückgeführt. Der pH-Wert des so gewonnenen Filterkuchens von kolloidalem Lignin (9.3) liegt bei etwa 9, der Trockenstoffgehalt bei etwa 55%. Durch das erfindungsgemäße Verfahren wird nun aus dem im Filterkuchen beinhalteten kolloidalen Lignin ein Feinsediment an karbonisiertem Lignin hergestellt.

Der Filterkuchen des kolloidalen Lignins (9.3) wird zunächst in einer Vorrichtung zur Mischung (E.3) mit Wasser auf einen Trockenstoffgehalt von etwa 20% verdünnt, wodurch die Lignin beinhaltende Flüssigkeit gewonnen wird. Der pH-Wert der Lignin beinhaltenden Flüssigkeit wird durch Zugabe von H₂SO₄ (12.3) in die Vorrichtung zur Mischung (E.3) auf etwa 8 abgesenkt. Die so behandelte Lignin beinhaltenden Flüssigkeit (11.3) wird über eine Dauer von 3 Stunden und bei einer Temperatur von 230 °C in einer hydrothermalen Karbonisierung (B.3) hydrothermal karbonisiert. Der pH-Wert der das karbonisierte Lignin beinhaltenden Flüssigkeit (3.3) beträgt nach der hydrothermalen Karbonisierung etwa 8.

Das karbonisierte Lignin wird von der das karbonisierte Lignin beinhaltenden Flüssigkeit durch eine mechanische Entwässerung in einer Membranfilterpresse (C.3) abgetrennt, wodurch ein Filterkuchen gewonnen wird. Das so gewonnene Filtrat (5.3) wird in die Eindampfanlage des KRAFT Verfahrens zurückgeführt. Anschließend wird der Filterkuchen mit Wasser (7.3) gewaschen. Das dabei anfallende Waschwasser (8.3) wird zur Verdünnung des Filterkuchens des kolloidalen Lignins auf einen Trockenstoffgehalt von etwa 20% vor der hydrothermalen Karbonisierung genutzt. Der gewaschene Filterkuchen (4.3) besteht aus einem Feinsediment an karbonisiertem Lignin und verbleibendem Wasser und wird aus dem Verfahren ausgetragen.

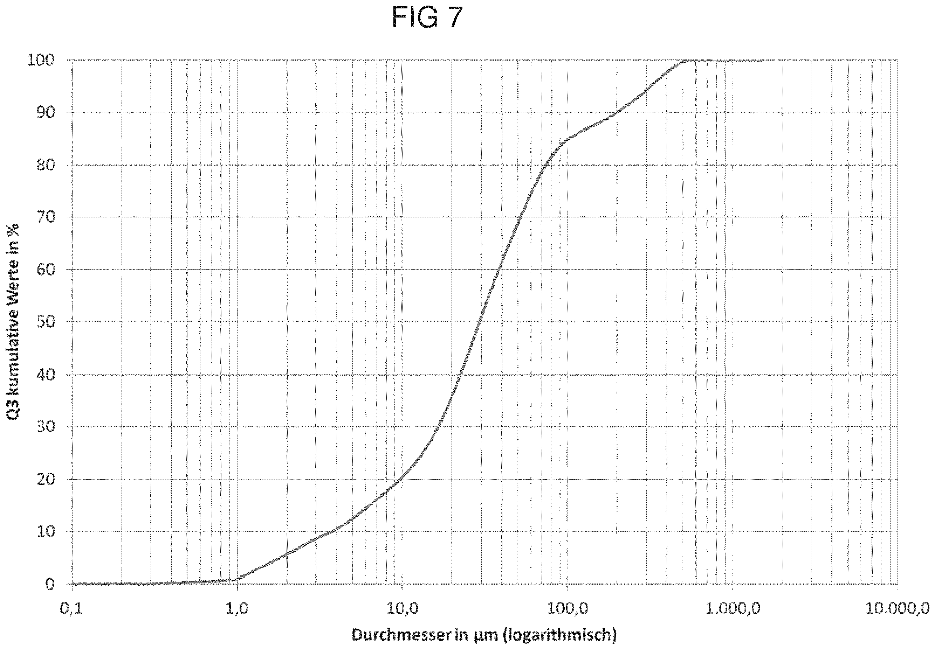

Zur Ermittlung der Q3-Verteilung der Korngröße des Feinsediments an karbonisiertem Lignins wurde der Filterkuchen (4.3) mit destilliertem Wasser verdünnt, mit Hilfe von Ultraschall über eine Dauer von 120 Sekunden dispergiert und mittels Laserbeugung mit dem Gerät Cilas-Lasergranulometer 1190 vermessen. Die so ermittelte Korngrößenverteilung des Feinsediments an karbonisiertem Lignin ist in FIG 7 dargestellt, die die Q3-Verteilung des karbonisierten Lignins für das Ausführungsbeispiel 3a zeigt. Der D90 beträgt 197,91 µm und der D50 beträgt 29,24 µm.

### Ausführungsbeispiel 3b (FIG 3):

Im Ausführungsbeispiel 3b wird ein erfindungsgemäßes Verfahren zur Gewinnung eines stabilisierten Lignins mit definierter Korngrößenverteilung auf kolloidales Lignin angewandt. Der Ligninanteil des kolloidalen Lignins liegt über 90%.

Das kolloidale Lignin wird durch Ansäuern von Schwarzlauge (1.3) mit CO₂, (6.3) in einer Vorrichtrung zur Absenkung des pH-Wertes (A.3) welche aus der Eindampfanlage eines KRAFT Verfahrens entnommen wird, aus dieser ausgefällt. Anschließend wird das Gemisch aus Schwarzlauge und ausgefälltem Lignin (2.3) einer Membranfilterpresse (D.3) zugeführt und dort mechanisch entwässert. Das Filtrat aus der Membranfilterpresse (10.3) wird in die Eindampfanlage des KRAFT Verfahrens zurückgeführt. Der pH-Wert des so gewonnenen Filterkuchens von kolloidalem Lignin (9.3) liegt bei etwa 9, der Trockenstoffgehalt bei etwa 55%. Durch das erfindungsgemäße Verfahren wird nun aus dem im Filterkuchen beinhalteten kolloidalen Lignin ein Feinsediment an karbonisiertem Lignin hergestellt.

Der Filterkuchen des kolloidalen Lignins (9.3) wird zunächst in einer Vorrichtung zur Mischung (E.3) mit Wasser auf einen Trockenstoffgehalt von etwa 20% verdünnt, wodurch die Lignin beinhaltende Flüssigkeit gewonnen wird. Der pH-Wert der Lignin beinhaltenden Flüssigkeit wird im Ausführungsbeispiel 3b im Unterschied zu Ausführungsbeispiel 3a nicht durch Zugabe von H₂SO₄ verändert. Der Strom 12.3 ist demzufolge null. Die so behandelte Lignin beinhaltenden Flüssigkeit (11.3) wird über eine Dauer von 3 Stunden und bei einer Temperatur von 230 °C in einer hydrothermalen Karbonisierung (B.3) hydrothermal karbonisiert. Der pH-Wert der das karbonisierte Lignin beinhaltenden Flüssigkeit (3.3) beträgt nach der hydrothermalen Karbonisierung etwa 8,5.

Das karbonisierte Lignin wird von der das karbonisierte Lignin beinhaltenden Flüssigkeit durch eine mechanische Entwässerung in einer Membranfilterpresse (C.3) abgetrennt, wodurch ein Filterkuchen gewonnen wird. Das so gewonnene Filtrat (5.3) wird in die Eindampfanlage des KRAFT Verfahrens zurückgeführt. Anschließend wird der Filterkuchen mit Wasser (7.3) gewaschen. Das dabei anfallende Waschwasser (8.3) wird zur Verdünnung des Filterkuchens des kolloidalen Lignins auf einen Trockenstoffgehalt von etwa 20% vor der hydrothermalen Karbonisierung genutzt. Der gewaschene Filterkuchen (4.3) besteht aus einem Feinsediment an karbonisiertem Lignin und verbleibendem Wasser und wird aus dem Verfahren ausgetragen.

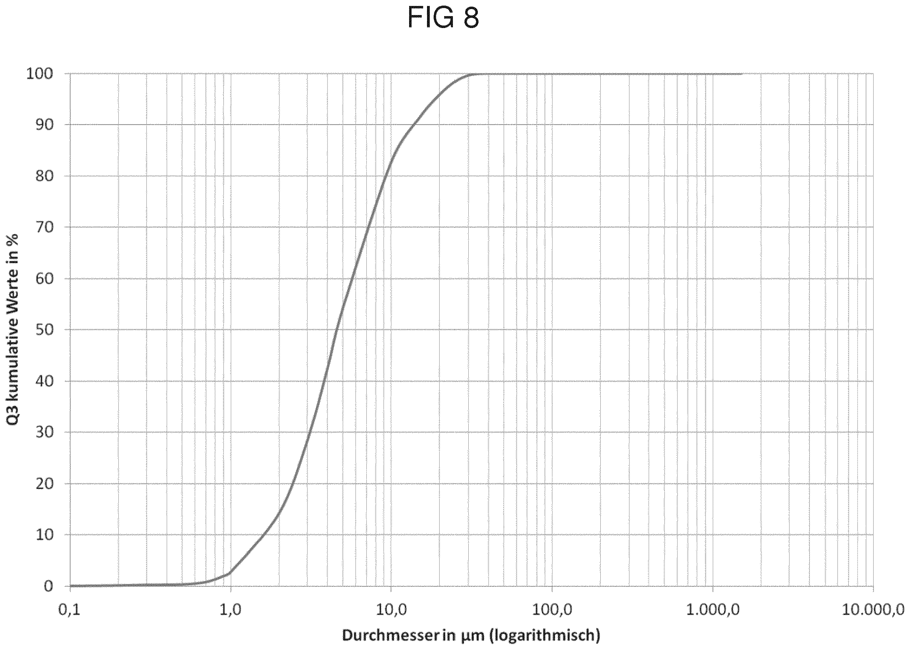

Zur Ermittlung der Q3-Verteilung der Korngröße des Feinsediments an karbonisiertem Lignins wurde der Filterkuchen (4.3) mit destilliertem Wasser verdünnt, mit Hilfe von Ultraschall über eine Dauer von 120 Sekunden dispergiert und mittels Laserbeugung mit dem Gerät Cilas-Lasergranulometer 1190 vermessen. Die so ermittelte Korngrößenverteilung des Feinsediments an karbonisiertem Lignin ist in FIG 8 dargestellt, die die Q3-Verteilung des karbonisierten Lignins für das Ausführungsbeispiel 3b zeigt. Der D90 beträgt 13,88 µm und der D50 beträgt 4,62 µm.

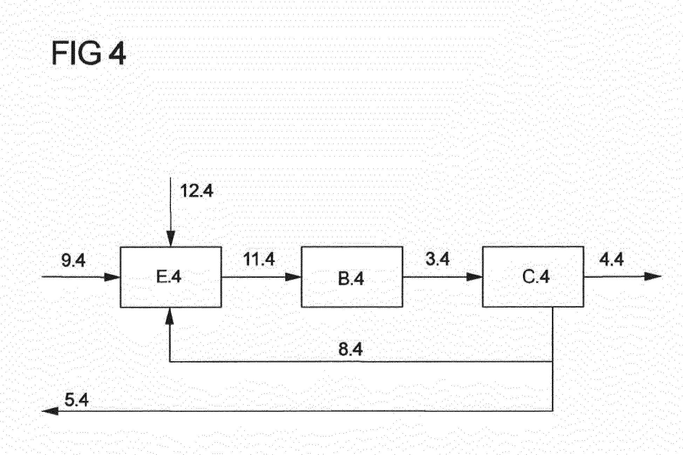

Der Vergleich der Ausführungsbeispiele 3a und 3b zeigt, wie durch eine Erhöhung der H+ lonenkonzentration durch die zusätzliche Zugabe von H₂SO₄ nach der Zugabe von CO₂ im Beispiel 3a, auf die Korngrößenverteilung des karbonisierten Lignins Einfluss genommen und gegenüber dem Ausführungsbeispiel 3b ein gröberes Produkt gewonnen werden kann. Ausführungsbeispiel 4a (FIG 4):

Im Ausführungsbeispiel 4a wird ein erfindungsgemäßes Verfahren zur Gewinnung eines stabilisierten Lignins mit definierter Korngrößenverteilung auf einen Lignin beinhaltenden Filterkuchen aus einem Hydrolyseverfahren angewandt. Der Ligninanteil des Filterkuchens beträgt etwa 70%. Durch das Verfahren wird aus dem Lignin ein Feinsediment an karbonisiertem Lignin hergestellt.

Der Lignin beinhaltende Filterkuchen (9.2) wird zunächst in einer Vorrichtung zur Mischung (E.4) mit Wasser auf einen Trockenstoffgehalt von etwa 20% verdünnt, wodurch die Lignin beinhaltende Flüssigkeit gewonnen wird. Der pH-Wert der Lignin beinhaltenden Flüssigkeit beträgt etwa 4,5. Anschließend wird der pH-Wert durch Zugabe von KOH (12.4) auf etwa 10 angehoben. Die so behandelte Lignin beinhaltenden Flüssigkeit (11.4) wird über eine Dauer von 3 Stunden und bei einer Temperatur von 250°C in einer hydrothermalen Karbonisierung (B.4) hydrothermal karbonisiert. Der pH-Wert der das karbonisierte Lignin beinhaltenden Flüssigkeit (3.4) beträgt nach der hydrothermalen Karbonisierung etwa 5. Das karbonisierte Lignin wird von der das karbonisierte Lignin beinhaltenden Flüssigkeit durch eine mechanische Entwässerung (C.4) in einer Membranfilterpresse abgetrennt.

Das dabei anfallende Filtrat wird teilweise (8.4) wird zur Verdünnung des Filterkuchens auf einen Trockenstoffgehalt von etwa 20% vor der hydrothermalen Karbonisierung in E.4 genutzt und teilweise (5.4) aus dem Verfahren ausgetragen. Der Filterkuchen (4.4) besteht aus einem Feinsediment an karbonisiertem Lignin und verbleibender Flüssigkeit und wird aus dem Verfahren ausgetragen.

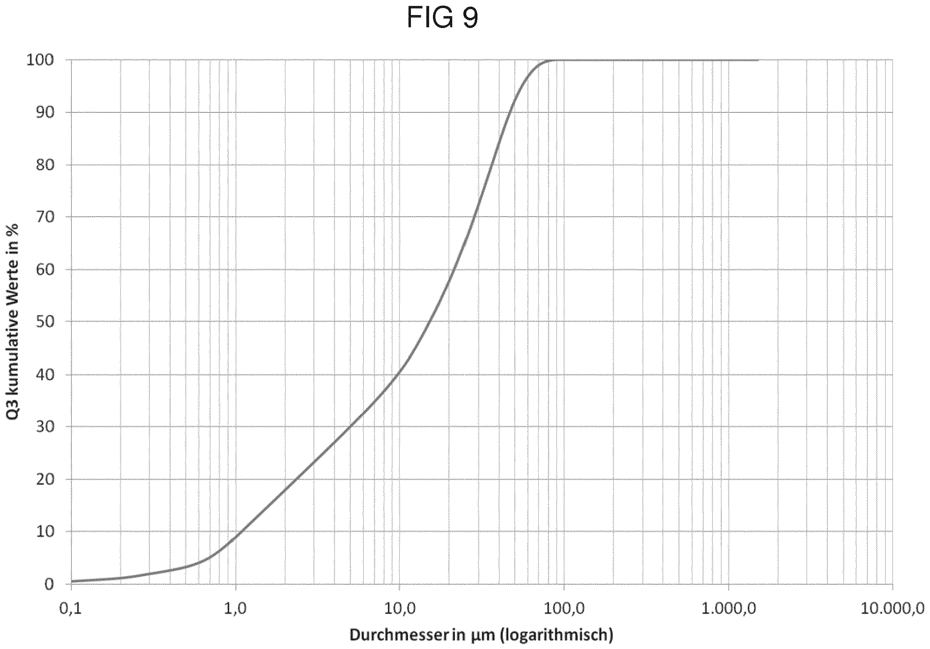

Zur Ermittlung der Q3-Verteilung der Korngröße des Feinsediments an karbonisiertem Lignins wurde der Filterkuchen (4.4) mit destilliertem Wasser verdünnt, mit Hilfe von Ultraschall über eine Dauer von 60 Sekunden dispergiert und mittels Laserbeugung mit dem Gerät Cilas-Lasergranulometer 1190 vermessen. Die so ermittelte Korngrößenverteilung des Feinsediments an karbonisiertem Lignin ist in FIG 9 dargestellt, die die Q3-Verteilung des karbonisierten Lignins für das Ausführungsbeispiel 4a zeigt. Der D90 beträgt 46,69 µm und der D50 beträgt 15,20 µm.

### Ausführungsbeispiel 4b (FIG 4):

Im Ausführungsbeispiel 4b wird ein erfindungsgemäßes Verfahren zur Gewinnung eines stabilisierten Lignins mit definierter Korngrößenverteilung auf einen Lignin beinhaltenden Filterkuchen aus einem Hydrolyseverfahren angewandt. Der Ligninanteil des Filterkuchens beträgt etwa 70%. Durch das Verfahren wird aus dem Lignin ein Feinsediment an karbonisiertem Lignin hergestellt.

Der Lignin beinhaltende Filterkuchen (9.2) wird zunächst in einer Vorrichtung zur Mischung (E.4) mit Wasser auf einen Trockenstoffgehalt von etwa 15% verdünnt, wodurch die Lignin beinhaltende Flüssigkeit gewonnen wird. Der pH-Wert der Lignin beinhaltenden Flüssigkeit beträgt etwa 5. Der pH-Wert der Lignin beinhaltenden Flüssigkeit wird im Gegensatz zum Ausführungsbeispiel 4a nicht durch die Zugabe von KOH verändert. Der Strom 12.4 ist demnach null. Die Lignin beinhaltenden Flüssigkeit (11.4) wird über eine Dauer von 3 Stunden und bei einer Temperatur von 230°C in einer hydrothermalen Karbonisierung (B.4) hydrothermal karbonisiert. Der pH-Wert der das karbonisierte Lignin beinhaltenden Flüssigkeit (3.4) beträgt nach der hydrothermalen Karbonisierung etwa 4. Das karbonisierte Lignin wird von der das karbonisierte Lignin beinhaltenden Flüssigkeit durch eine mechanische Entwässerung (C.4) in einer Membranfilterpresse abgetrennt.

Das dabei anfallende Filtrat wird teilweise (8.4) wird zur Verdünnung des Filterkuchens auf einen Trockenstoffgehalt von etwa 15% vor der hydrothermalen Karbonisierung in E.4 genutzt und teilweise (5.4) aus dem Verfahren ausgetragen. Der Filterkuchen (4.4) besteht aus einem Feinsediment an karbonisiertem Lignin und verbleibender Flüssigkeit und wird aus dem Verfahren ausgetragen.

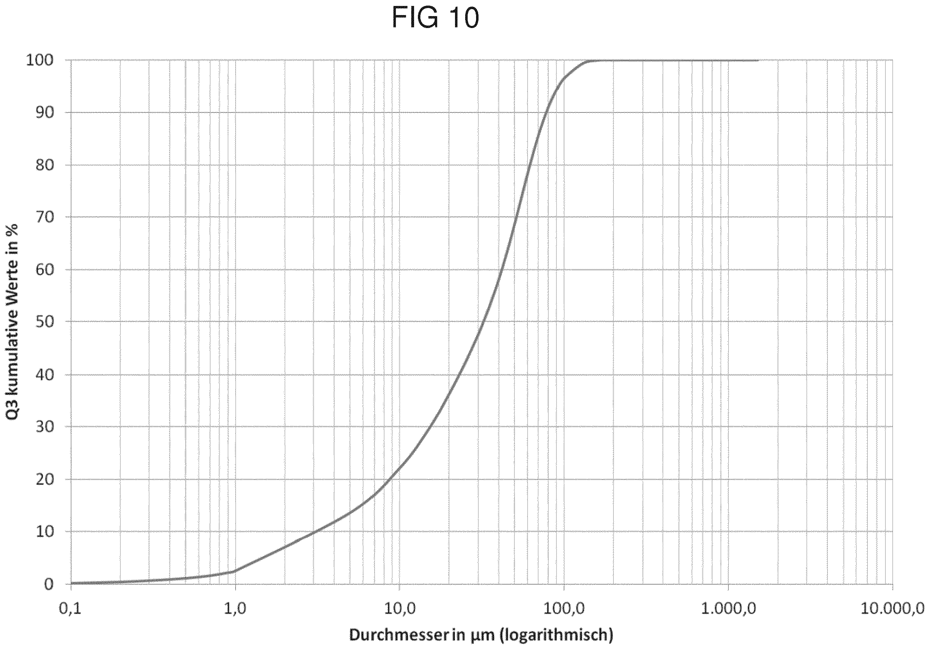

Zur Ermittlung der Q3-Verteilung der Korngröße des Feinsediments an karbonisiertem Lignins wurde der Filterkuchen (4.4) mit destilliertem Wasser verdünnt, mit Hilfe von Ultraschall über eine Dauer von 60 Sekunden dispergiert und mittels Laserbeugung mit dem Gerät Cilas-Lasergranulometer 1190 vermessen. Die so ermittelte Korngrößenverteilung des Feinsediments an karbonisiertem Lignin ist in FIG 10 dargestellt, die die Q3-Verteilung des karbonisierten Lignins für das Ausführungsbeispiel 4b zeigt. Der D90 beträgt 77,98 µm und der D50 beträgt 32,33 µm.

Der Vergleich der Ausführungsbeispiele 4a und 4b zeigt, wie durch eine Erniedrigung der H+ lonenkonzentration durch die zusätzliche Zugabe von KOH im Beispiel 4a, auf die Korngrößenverteilung des karbonisierten Lignins Einfluss genommen und gegenüber dem Ausführungsbeispiel 4b ein feineres Produkt gewonnen werden kann.

## Patentansprüche

1. Verfahren zur Gewinnung von karbonisiertem Lignin mit definierter Korngrößenverteilung aus einer Lignin beinhaltenden Flüssigkeit, wobei die Lignin beinhaltende Flüssigkeit einer hydrothermalen Karbonisierung unterzogen wird, wodurch das Lignin in ein karbonisiertes Lignin überführt wird, und das karbonisierte Lignin von der das karbonisierte Lignin beinhaltenden Flüssigkeit abgetrennt wird,
**dadurch gekennzeichnet, dass**
- die Lignin beinhaltende Flüssigkeit bei Temperaturen im Bereich von 150°C bis 280°C einer hydrothermalen Karbonisierung unterzogen wird und
- die Korngrößenverteilung des karbonisierten Lignins durch Anpassung der H+ lonenkonzentration in der Lignin beinhaltenden Flüssigkeit vor oder vor und während der hydrothermalen Karbonisierung eingestellt wird,
- wobei zum Erreichen einer möglichst geringen Korngrößenverteilung des karbonisierten Lignins, eine geringe H⁺ lonenkonzentration eingestellt wird und
- zum Erreichen einer möglichst großen Korngrößenverteilung des karbonisierten Lignins, eine hohe H⁺ lonenkonzentration eingestellt wird.

2. Verfahren nach Anspruch 1, **dadurch gekennzeichnet, dass** die Lignin beinhaltende Flüssigkeit bei Temperaturen im Bereich von 200°C bis 250°C einer hydrothermalen Karbonisierung unterzogen wird.

3. Verfahren nach Anspruch 1 oder 2, **dadurch gekennzeichnet, dass** die Lignin beinhaltende Flüssigkeit für die Dauer von mindestens 1 Stunden und maximal 6 Stunden einer hydrothermalen Karbonisierung unterzogen wird.

4. Verfahren nach einem der Ansprüche 1 bis 3, **dadurch gekennzeichnet, dass**
- die Korngrößenverteilung des karbonisierten Lignins durch Anpassung der H+ lonenkonzentration in der Lignin beinhaltenden Flüssigkeit vor und/oder während der hydrothermalen Karbonisierung so eingestellt wird, dass sich ein kolloidales karbonisiertes Lignin bildet, oder
- die Korngrößenverteilung des karbonisierten Lignins durch Anpassung der H+ lonenkonzentration in der Lignin beinhaltenden Flüssigkeit vor und/oder während der hydrothermalen Karbonisierung so eingestellt wird, dass sich ein Feinsediment an karbonisiertem Lignin bildet, oder
- die Korngrößenverteilung des karbonisierten Lignins durch Anpassung der H+ lonenkonzentration in der Lignin beinhaltenden Flüssigkeit vor und/oder während der hydrothermalen Karbonisierung so eingestellt wird, dass sich ein Grobsediment an karbonisiertem Lignin bildet.

5. Verfahren nach Anspruch 4, **dadurch gekennzeichnet, dass**
- für die Bildung kolloidalen karbonisierten Lignins, die H+ lonenkonzentration so angepasst wird, dass der pH-Wert der Lignin beinhaltenden Flüssigkeit vor und während der hydrothermalen Karbonisierung einen Wert von 10 nicht unterschreitet,
- für die Bildung eines Feinsediments an karbonisiertem Lignin, die H+ lonenkonzentration so angepasst wird, dass der pH-Wert der Lignin beinhaltenden Flüssigkeit vor und während der hydrothermalen Karbonisierung bei > 7 liegt, oder
- für die Bildung eines Grobsediments an karbonisiertem Lignin, die H+ lonenkonzentration so angepasst wird, dass der pH-Wert der Lignin beinhaltenden Flüssigkeit vor und während der hydrothermalen Karbonisierung bei < 9.

6. Verfahren nach Anspruch 5, **dadurch gekennzeichnet, dass**
- für die Bildung eines Feinsediments an karbonisiertem Lignin, die H+ lonenkonzentration so angepasst wird, dass der pH-Wert der Lignin beinhaltenden Flüssigkeit vor der hydrothermalen Karbonisierung bei > 7 und während der hydrothermalen Karbonisierung zwischen 7 und 11 liegt, oder
- für die Bildung eines Grobsediments an karbonisiertem Lignin, die H+ lonenkonzentration so angepasst wird, dass der pH-Wert der Lignin beinhaltenden Flüssigkeit vor der hydrothermalen Karbonisierung bei < 9, insbesondere bei < 8 und während der hydrothermalen Karbonisierung bei < 8 liegt.

7. Verfahren nach Anspruch 6, **dadurch gekennzeichnet, dass** für die Bildung eines Feinsediments an karbonisiertem Lignin, die H+ lonenkonzentration so angepasst wird, dass der pH-Wert der Lignin beinhaltenden Flüssigkeit vor der hydrothermalen Karbonisierung bei > 8 und/oder während der hydrothermalen Karbonisierung zwischen 8 und 10 liegt.

8. Verfahren nach einem der Ansprüche 5 bis 7, **dadurch gekennzeichnet, dass** für die Bildung eines Feinsediments an karbonisiertem Lignin, die H+ lonenkonzentration so angepasst wird, dass der D90 des Feinsediments an karbonisiertem Lignin ≤ 100 µm oder < 100 µm ist.

9. Verfahren nach einem der vorherigen Ansprüche, **dadurch gekennzeichnet, dass** das Lignin vor der hydrothermalen Karbonisierung zu über 50%, insbesondere zu über 60% oder zu über 70% in der Lignin beinhaltenen Flüssigkeit gelöst ist.

10. Verfahren nach einem der vorherigen Ansprüche, **dadurch gekennzeichnet, dass** zur Erhöhung der H+ lonenkonzentration in der Lignin beinhaltenden Flüssigkeit eine Säure eingesetzt wird, die ein Reaktionsteilnehmer während der hydrothermalen Karbonisierung ist, oder zur Reduzierung der H+ lonenkonzentration in der Lignin beinhaltenden Flüssigkeit eine Base eingesetzt wird, die der Bindung von H+ Ionen dient.

11. Verfahren nach einem der vorherigen Ansprüche, **dadurch gekennzeichnet, dass** CO₂ oder H2S zur Anpassung der H+ lonenkonzentration genutzt wird.

12. Verfahren nach einem der vorherigen Ansprüche, **dadurch gekennzeichnet, dass** das Verfahren angewandt wird auf
- Schwarzlauge aus einem alkalischen Fraktionierungsprozess insbesondere nach dem KRAFT Verfahren oder
- eine Lignin beinhaltende Flüssigkeit, die durch die Verdünnung eines Lignin enthaltenden Filterkuchens gewonnen wurde, insbesondere durch Verdünnung eines Filterkuchens welcher ein aus Schwarzlauge ausgefälltes Lignin beinhaltet oder durch Verdünnung eines Filterkuchens der den Lignin beinhaltenden Rückstand aus einer Hydrolyse beinhaltet.

13. Verfahren nach einem der vorherigen Ansprüche, **dadurch gekennzeichnet, dass**
- Lignin aus einer ersten Lignin beinhaltenden Flüssigkeit ausgefällt wird,
- das ausgefällte Lignin von der ersten Lignin beinhaltenden Flüssigkeit abgetrennt wird,
- das ausgefällte und abgetrennte Lignin in einer Flüssigkeit suspendiert wird und hierdurch eine zweite Lignin beinhaltende Flüssigkeit gewonnen wird und
- die zweite Lignin beinhaltende Flüssigkeit der hydrothermalen Karbonisierung unterzogen wird.

14. Verfahren nach einem der vorherigen Ansprüche, **dadurch gekennzeichnet, dass** das Lignin bei seiner Überführung in karbonisiertes Lignin während der hydrothermalen Karbonisierung zumindest teilweise aus der Lignin beinhaltenden Flüssigkeit ausfällt oder ausgefällt wird.

15. Verfahren nach einem der vorherigen Ansprüche, **dadurch gekennzeichnet, dass** das karbonisierte Lignin von der das karbonisierte Lignin beinhaltenden Flüssigkeit durch eine mechanische Entwässerung abgetrennt wird und das abgetrennte Lignin gewaschen wird.

## Claims

1. Process for recovering carbonized lignin having a defined grain size distribution from a lignin-containing liquid, wherein the lignin-containing liquid is subjected to a hydrothermal carbonization to convert the lignin into a carbonized lignin and the carbonized lignin is separated from the liquid containing the carbonized lignin,
**characterized in that**
- the lignin-containing liquid is subjected to a hydrothermal carbonization at temperatures in the range from 150°C to 280°C and
- by adapting the H+ ion concentration in the lignin-containing liquid before or before and during the hydrothermal carbonization the grain size distribution of the carbonized lignin is adjusted,
- wherein a low H+ ion concentration is adjusted in order to achieve the smallest possible grain size distribution of the carbonized lignin and
- a high H+ ion concentration is adjusted in order to achieve the largest possible grain size distribution of the carbonized lignin.

2. Process according to Claim 1, **characterized in that** the lignin-containing liquid is subjected to a hydrothermal carbonization at temperatures in the range from 200°C to 250°C.

3. Process according to either of Claims 1 and 2, **characterized in that** the lignin-containing liquid is subjected to a hydrothermal carbonization for the duration of not less than 1 hour and not more than 6 hours.

4. Process according to any of Claims 1 to 3, **characterized in that**
- by adapting the H+ ion concentration in the lignin-containing liquid before and/or during the hydrothermal carbonization the grain size distribution of the carbonized lignin is adjusted such that a colloidal carbonized lignin is formed or
- by adapting the H+ ion concentration in the lignin-containing liquid before and/or during the hydrothermal carbonization the grain size distribution of the carbonized lignin is adjusted such that a fine sediment of carbonized lignin is formed or
- by adapting the H+ ion concentration in the lignin-containing liquid before and/or during the hydrothermal carbonization the grain size distribution of the carbonized lignin is adjusted such that a coarse sediment of carbonized lignin is formed.

5. Process according to Claim 4, **characterized in that**
- for formation of colloidal carbonized lignin the H+ ion concentration is adapted such that the pH of the lignin-containing liquid before and during the hydrothermal carbonization does not fall below 10,
- for formation of a fine sediment of carbonized lignin the H+ ion concentration is adapted such that the pH of the lignin-containing liquid before and during the hydrothermal carbonization is > 7 or
- for formation of a coarse sediment of carbonized lignin the H+ ion concentration is adapted such that the pH of the lignin-containing liquid before and during the hydrothermal carbonization is < 9.

6. Process according to Claim 5, **characterized in that**
- for formation of a fine sediment of carbonized lignin the H+ ion concentration is adapted such that the pH of the lignin-containing liquid before the hydrothermal carbonization is > 7 and during the hydrothermal carbonization is between 7 and 11 or
- for formation of a coarse sediment of carbonized lignin the H+ ion concentration is adapted such that the pH of the lignin-containing liquid before the hydrothermal carbonization is < 9, in particular < 8, and during the hydrothermal carbonization is < 8.

7. Process according to Claim 6, **characterized in that** for formation of a fine sediment of carbonized lignin the H+ ion concentration is adapted such that the pH of the lignin-containing liquid before the hydrothermal carbonization is > 8 and/or during the hydrothermal carbonization is between 8 and 10.

8. Process according to any of Claims 5 to 7, **characterized in that** for formation of a fine sediment of carbonized lignin the H+ ion concentration is adapted such that the D90 of the fine sediment of carbonized lignin is ≤ 100 µm or < 100 µm.

9. Process according to any of the preceding claims, **characterized in that** the lignin before the hydrothermal carbonization is dissolved in the lignin-containing liquid to an extent of greater than 50%, in particular greater than 60% or greater than 70%.

10. Process according to any of the preceding claims, **characterized in that** to increase the H+ ion concentration in the lignin-containing liquid an acid which is a reaction participant during the hydrothermal carbonization is employed or to reduce the H+ ion concentration in the lignin-containing liquid a base which binds H+ ions is employed.

11. Process according to any of the preceding claims, **characterized in that** CO₂ or H₂S is used for adapting the H+ ion concentration.

12. Process according to any of the preceding claims, **characterized in that** the process is applied to
- black liquor from an alkaline fractionation process particularly according to the KRAFT process or
- a lignin-containing liquid recovered by dilution of a lignin-containing filtercake, in particular by dilution of a filtercake containing a lignin precipitated from black liquor or by dilution of a filtercake containing the lignin-containing residue from a hydrolysis.

13. Process according to any of the preceding claims, **characterized in that**
- lignin is precipitated from a first lignin-containing liquid,
- the precipitated lignin is separated from the first lignin-containing liquid,
- the precipitated and separated lignin is suspended in a liquid to obtain a second lignin-containing liquid and
- the second lignin-containing liquid is subjected to the hydrothermal carbonization.

14. Process according to any of the preceding claims, **characterized in that** the lignin precipitates or is precipitated from the lignin-containing liquid at least partly upon conversion into carbonized lignin during the hydrothermal carbonization.

15. Process according to any of the preceding claims, **characterized in that** the carbonized lignin is separated from the liquid containing the carbonized lignin by a mechanical dewatering and the lignin separated off is washed.

## Revendications

1. Procédé d'obtention de lignine carbonisée ayant une distribution de tailles de grains définie à partir d'un liquide contenant de la lignine, selon lequel le liquide contenant de la lignine est soumis à une carbonisation hydrothermale, par laquelle la lignine est transformée en une lignine carbonisée, et la lignine carbonisée est séparée du liquide contenant la lignine carbonisée,
**caractérisé en ce que**
- le liquide contenant de la lignine est soumis à une carbonisation hydrothermale à des températures dans la plage allant de 150 °C à 280 °C, et
- la distribution de tailles de grains de la lignine carbonisée est fixée par ajustement de la concentration en ions H⁺ dans le liquide contenant de la lignine avant ou avant et pendant la carbonisation hydrothermale,
- dans lequel une concentration en ions H⁺ faible étant fixée pour l'obtention d'une distribution de tailles de grains plus petite possible de la lignine carbonisée, et
- une concentration en ions H⁺ élevée étant fixée pour obtenir d'une distribution de tailles de grains plus grande possible de la lignine carbonisée.

2. Procédé selon la revendication 1, **caractérisé en ce que** le liquide contenant de la lignine est soumis à une carbonisation hydrothermale à des températures dans la plage allant de 200 °C à 250 °C.

3. Procédé selon la revendication 1 ou 2, **caractérisé en ce que** le liquide contenant de la lignine est soumis à une carbonisation hydrothermale pendant une durée d'au moins 1 heure et d'au plus 6 heures.

4. Procédé selon l'une quelconque des revendications 1 à 3, **caractérisé en ce que**
- la distribution de tailles de grains de la lignine carbonisée est fixée par ajustement de la concentration en ions H⁺ dans le liquide contenant de la lignine avant et/ou pendant la carbonisation hydrothermale, de telle sorte qu'une lignine carbonisée colloïdale se forme, ou
- la distribution de tailles de grains de la lignine carbonisée est fixée par ajustement de la concentration en ions H⁺ dans le liquide contenant de la lignine avant et/ou pendant la carbonisation hydrothermale, de telle sorte qu'un sédiment fin de lignine carbonisée se forme, ou
- la distribution de tailles de grains de la lignine carbonisée est fixée par ajustement de la concentration en ions H⁺ dans le liquide contenant de la lignine avant et/ou pendant la carbonisation hydrothermale, de telle sorte qu'un sédiment grossier de lignine carbonisée se forme.

5. Procédé selon la revendication 4, **caractérisé en ce que**
- pour la formation de lignine carbonisée colloïdale, la concentration en ions H⁺ est ajustée de telle sorte que le pH du liquide contenant de la lignine ne passe pas en dessous d'une valeur de 10 avant et pendant la carbonisation hydrothermale,
- pour la formation d'un sédiment fin de lignine carbonisée, la concentration en ions H⁺ est ajustée de telle sorte que le pH du liquide contenant de la lignine soit > 7 avant et pendant la carbonisation hydrothermale, ou
- pour la formation d'un sédiment grossier de lignine carbonisée, la concentration en ions H⁺ est ajustée de telle sorte que le pH du liquide contenant de la lignine soit < 9 avant et pendant la carbonisation hydrothermale.

6. Procédé selon la revendication 5, **caractérisé en ce que**
- pour la formation d'un sédiment fin de lignine carbonisée, la concentration en ions H⁺ est ajustée de telle sorte que le pH du liquide contenant de la lignine soit > 7 avant la carbonisation hydrothermale, et compris entre 7 et 11 pendant la carbonisation hydrothermale, ou
- pour la formation d'un sédiment grossier de lignine carbonisée, la concentration en ions H⁺ est ajustée de telle sorte que le pH du liquide contenant de la lignine soit < 9, notamment < 8, avant la carbonisation hydrothermale, et < 8 pendant la carbonisation hydrothermale.

7. Procédé selon la revendication 6, **caractérisé en ce que,** pour la formation d'un sédiment fin de lignine carbonisée, la concentration en ions H⁺ est ajustée de telle sorte que le pH du liquide contenant de la lignine soit > 8 avant la carbonisation hydrothermale, et/ou compris entre 8 et 10 pendant la carbonisation hydrothermale.

8. Procédé selon l'une quelconque des revendications 5 à 7, **caractérisé en ce que,** pour la formation d'un sédiment fin de lignine carbonisée, la concentration en H⁺ est ajustée de telle sorte que le D90 du sédiment fin de lignine carbonisée soit ≤ 100 µm ou < 100 µm.

9. Procédé selon l'une quelconque des revendications précédentes, **caractérisé en ce que** la lignine est dissoute à plus de 50 %, notamment à plus de 60 % ou à plus de 70 %, dans le liquide contenant de la lignine avant la carbonisation hydrothermale.

10. Procédé selon l'une quelconque des revendications précédentes, **caractérisé en ce qu'**un acide qui est un partenaire de réaction pendant la carbonisation hydrothermale est utilisé pour augmenter la concentration en ions H⁺ dans le liquide contenant de la lignine, ou une base qui sert à la liaison d'ions H⁺ est utilisée pour la réduction de la concentration en ions H⁺ dans le liquide contenant de la lignine.

11. Procédé selon l'une quelconque des revendications précédentes, **caractérisé en ce que** du CO₂ ou de l'H₂S est utilisé pour l'ajustement de la concentration en ions H⁺.

12. Procédé selon l'une quelconque des revendications précédentes, **caractérisé en ce que** le procédé est appliqué à :
- une liqueur noire issue d'un procédé de fractionnement alcalin, notamment selon le procédé KRAFT, ou
- un liquide contenant de la lignine qui a été obtenu par la dilution d'un gâteau de filtration contenant de la lignine, notamment par dilution d'un gâteau de filtration qui contient une lignine précipitée à partir d'une liqueur noire, ou par dilution d'un gâteau de filtration qui contient le résidu contenant de la lignine d'une hydrolyse.

13. Procédé selon l'une quelconque des revendications précédentes, **caractérisé en ce que**
- de la lignine est précipitée à partir d'un premier liquide contenant de la lignine,
- la lignine précipitée est séparée du premier liquide contenant de la lignine,
- la lignine précipitée et séparée est suspendue dans un liquide, et un deuxième liquide contenant de la lignine est ainsi obtenu, et
- le deuxième liquide contenant de la lignine est soumis à la carbonisation hydrothermale.

14. Procédé selon l'une quelconque des revendications précédentes, **caractérisé en ce que** la lignine précipite ou est précipitée au moins en partie à partir du liquide contenant de la lignine lors de sa transformation en lignine carbonisée pendant la carbonisation hydrothermale.

15. Procédé selon l'une quelconque des revendications précédentes, **caractérisé en ce que** la lignine carbonisée est séparée du liquide contenant la lignine carbonisée par une déshydratation mécanique, et la lignine séparée est lavée.
